# EUROPEAN PATENT SPECIFICATION

(11) **EP 3 862 298 B1**
(45) Date of publication and mention of the grant of the patent: **17.09.2025**
(21) Application number: 21154750.0
(22) Date of filing: 02.02.2021
(51) Int. Cl.: B65G 17/24, B65G 17/08

(54) **MODULAR BELT LINK AS WELL AS A CONVEYOR BELT ASSEMBLED FROM A PLURALITY OF SUCH BELT LINKS**
MODULARES BANDGLIED SOWIE EIN AUS MEHREREN SOLCHEN BANDGLIEDERN ZUSAMMENGESETZTES FÖRDERBAND
MAILLON DE COURROIE MODULAIRE AINSI QUE COURROIE TRANSPORTEUSE ASSEMBLÉE À PARTIR D'UNE PLURALITÉ DE TELS MAILLONS DE COURROIE

(30) Priority: 04.02.2020 DK PA202070069
(43) Date of publication of application: 11.08.2021
(73) Proprietor: Ammeraal Beltech Modular A/S, 7100 Vejle (DK)
(72) Inventor: ANDERSEN, Kenneth Westergaard, 7100 Vejle (DK)
(74) Representative: Patrade A/S

(56) References cited:
- EP-A1- 2 943 423
- EP-B1- 2 943 423
- WO-A1-01/10753
- US-A1- 2010 243 411
- US-A1- 2014 190 799
- US-B2- 6 494 312

## Description

### Field of the Invention

The present invention relates to a modular belt link where a plurality of such modular belt links may be assembled into a conveyor belt.

EP2943423A1 discloses a conveyor modular belt link for a conveyor disclosing the preamble of claim 1.

### Background of the Invention

### Description of the Invention

Conveyor belts made from modular belt links are very well-known in the conveying business and are typically made by an injection moulding process of a thermo plastic material. These types of modular belt links come in a very wide variety of sizes and shapes where each type has special qualities, which makes it especially adaptable to a certain conveying task.

A specific type of these modular belts are provided with rollers or balls extending above the surface of the modular belt links such that for example boxes and the like may move on the surface of the belt and relative to the surface of the belt by action of the rollers. In some embodiments of these types of belts the rollers are replaced by balls such that also unidirectional motions may be contemplated.

The rollers or balls may be activated for example by means underneath the belt such that the rollers can be activated in order to accelerate items carried on the conveyor belt, for example in order to separate items on the belt or the rollers may be activated for sideways motion in order to remove an item from the belt at a certain station.

Also belts where the rollers or balls are not activated are known and referred to as a accumulating belts where items on the conveyor surface may engage a stop for one reason or the other along the conveying path, and due to the rollers and balls the conveyor belt may keep rotating without the item being carried onwards on the conveyor due to the fact that the rollers allow the conveyor belt to pass underneath the item with very little friction due to the provision of the rollers or balls.

Common for most of these types of conveyor belts is the fact that the endless conveyor belt is arranged around drive cylinders in each end. At least one of the drive cylinders is powered such that by rotating the drive cylinder it will by means of sprockets engage the underside of the modular conveyor belt and in this manner transfer the torque from the drive cylinder to the conveyor belt which thereby is forced into motion.

Depending on the character of the goods to be conveyed on the conveyor belt and the conveyor belt construction as such the combination of the sprockets in the rear side of the conveyor belt may be designed more or less robust. However, common for all these types of belts is that they need to have a dedicated point of attack on the underside of the belt in order to be able to transfer the torque force from the drive motor to the conveyor belt.

Typically, in the areas where the sprockets are supposed to engage the underside of the modular belt link a cavity or ridge is provided such that it becomes impossible to provide apertures in which rollers or balls may be mounted in this section. Therefore, the modular conveyor belts will have a rather large portion of its underside reserved for engaging sprockets.

A further aspect which has to be addressed by the modular belt links is the inherent strength in the conveyor belt module. The strength is required partly due to the transfer of force of one modular belt link to the other and in order to distribute the force, particularly the torque, from the sprocket's engagement with the underside of the conveyor belt to the rest of the conveyor belt.

Also depending on the load which the conveyor belt is designed to propel the modular belt links need to be strong enough to address these requirements.

### Object of the Invention

The present invention is directed to this type of modular belt link, but is particular in that it is addressing a need to increase the numbers/area of rollers and balls such that the overall friction for items carried on the conveyor belt may be reduced substantially and at the same time a substantial support for items carried on the conveyor is provided. It is clear that whereas a flat modular belt link is able to carry items on the entire surface a modular belt link provided with one or two balls will have the balls projecting from the surface and therefore the highest points on the carrying surface will be the apexes of the balls and as such the item carried on the conveyor belt will be carried in one or more points instead of a flat surface. This causes special requirements to the items being carried on the conveyor belt in order to ensure that these items are not damaged due to the transport on the conveyor.

Consequently, the present invention addresses this need by providing a modular belt link having a body section, said body section having a forward side and a rearward side, and lateral sides connecting said forward and rearward sides, where said body section has a thickness between a top surface and a rear surface, and further that means are provided along said forward and rearward sides for connecting the modular belt link to other substantially identical modular belt links arranged before and after said modular belt link, characterized in that a plurality of apertures through the thickness are provided, suitable to receive and retain a ball or roller rotatably in each aperture, such that the balls or rollers extend or may be brought to extend above the top surface of the body section where a first plurality of apertures are separated by a first mutual distance x and a plurality of second apertures are provided spaced from said first plurality of apertures by a distance y, and the plurality of second apertures are separated by a mutual second distance y, and the distance y from an adjacent aperture (30) of the first plurality of apertures (33,33'), and where in the rear surface at least partly into the thickness of the body section one or more cavities suitable to receive sprockets is/are arranged in between at least some of the apertures arranged with the second distance y, and where the first distance x is too short to allow cavities suitable to be engaged by sprockets.

Particularly the fact that a first plurality of apertures are arranged very closely, i.e. with a distance smaller than the width of a sprocket wheel provides the possibility that a substantial part of the overall surface of a modular belt link is provided with balls or rollers such that although the apex of a ball and roller does provide a point respectively a line of contact with for example a cardboard box being carried on the conveyor the sheer number of carrying points will substantially diminish the impact of a ball on the underside of a box to be carried and thereby have a more lenient handling of goods on the conveyor belt.

The fact that the distances x and y are dimensioned such that the distance y for example allows for a cavity suitable to be engageable by a sprocket wheel is to be understood in the sense that as already explained above the sprocket wheels are the means by which the torque from the drive motor is transferred to the underside of the conveyor belt and thereby providing the propelling force for the conveyor belt. For this reason the cavity needs to have a certain size in order to accommodate the sheer size of a suitable sprocket wheel but also needs to be strong enough such that the sprocket teeth are able to transfer sufficient force to the conveyor belt in the cavity.

In a further advantageous embodiment of the invention the first plurality of apertures comprises apertures arranged in one or more lines parallel to the forward side.

This particular embodiment is particularly advantageous where the length in the travelling direction of the conveyor belt is very short, i.e. the distance from the front side to the rear side is relatively short.

In a still further advantageous embodiment of the invention the first plurality of apertures are off-set arranged around a line parallel to the forward and rearward sides, such that the apertures alternates being closer to the front side and the rear side.

This particular embodiment is suitable when the distance between the forward side and the rearward side is somewhat larger whereby off-setting the apertures in a zig-zag pattern across a part of the top surface it is possible to accommodate a larger number of balls or rollers in the top surface of the modular belt link.

In the embodiment where the lateral distance between the closest apertures in the first plurality of apertures and the second plurality of apertures is the second distance y, it is foreseen that on the underside of the modular belt link two cavities suitable to be engaged by a sprocket wheel may be accommodated due to the two distances of y; the first distance of y between the first plurality and a first aperture in a second plurality and the second distance of y between two apertures in a second plurality.

In a still further advantageous embodiment of the invention balls are arranged in the apertures where the diameter of each ball is between 40% and 85% of the shortest distance between the front side and the rear side, preferably 50% to 65% and most preferred between 55% and 60%.

In this manner a substantial part of the top surface of each modular belt link becomes a friction-less surface by the provision of a ball in the many apertures.

In a practical embodiment an example of a ball diameter for applications has a diameter of 12,7 mm. With the above mentioned ratios between the diameter of the ball and the modular belt links extend in the traveling direction (not taking into account the extending eye parts), the modular belt links will have a length of between 14,7mm and 31,75 mm. It is therefore clear that adjacent balls in adjacent modular belt links, also in the travelling direction of the belt will be very closely spaced, and thereby provide a reduced friction.

In a still further advantageous embodiment of the invention the first plurality of apertures and the more second apertures constitute between 20% and 70% of the top surface area of the modular belt link. In this embodiment it is evident that a substantial part of the top surface is constituted by apertures and as such by the provision of friction-less carrying elements in the shape of balls and rollers whereas the integrity and strength of the modular belt link itself must be provided by the remaining area of the modular belt link not being apertures.

In a still further advantageous embodiment of the modular belt link the top surface adjacent each lateral side is provided with a flat section, said flat section being delimited by the lateral side and an edge parallel to the lateral side distanced z from the lateral side where the flat section is inclined with respect to the top side.

Particularly when moving items laterally onto or off the conveyor belt the inclined flat section may help in elevating an item being pushed onto the modular belt link/conveyor by inclining the flat section sufficiently such that the top of the inclined section is at the same level as the top of the balls or rollers arranged in the apertures in the modular belt link.

In some embodiments the flat section is inclined between 4° and 8° relative to the top surface, but any suitable angle creating a suitable inclination must of course be contemplated within this concept.

Further advantageous embodiments are set out in the remaining dependent claims.

The invention is also directed to a conveyor belt assembled from modular belt links as described above where the conveyor belt comprises a number of rows of modular belt links, where each row laterally may comprise a plurality of modular belt links, where when each row comprises two or more belt links, the belt links in one row are constructed by arranging an edge link consisting of only second apertures, said edge link having half the lateral width of the lateral width of a modular belt link, where the following lateral modular belt link is arranged with lateral side adjacent the first apertures towards the edge link, and the following lateral modular belt link is arranged with lateral side adjacent the first apertures towards the previous link and so on across the width of the conveyor belt, and where the adjacent row is provided with the rear side of a modular belt link engaging a side of an edge link with the second apertures in the same lateral orientation as the edge link and the following lateral modular belt link is arranged with the lateral side adjacent the second apertures towards the previous link and so on across the width of the conveyor belt, whereby the conveyor belt will have zones in the travelling direction of the conveyor belt where a zone only comprises second apertures and adjacent zones only comprising first apertures.

In this manner by providing an edge link in every other row the rows becomes offset (bricklaying pattern). Furthermore as the modular belt links are turned 180° with respect to the intended travelling direction in each adjacent row, longitudinal zones with first apertures and second apertures respectively are provided, such that the sprocket wheels - usually arranged under the transport surface, engages the cavities provided between the second apertures, which are now arranged in longitudinal zones.

### Description of the Drawing

The invention will now be described with reference to the accompanying drawings wherein
- Figure 1: illustrates a modular belt link according to the present invention
- Figure 2: illustrates the underside of the modular belt link in perspective
- Figure 3: illustrates a connection of the modular belt link to other substantially identical modular belt links
- Figures 4A and 4B: illustrates a schematic cross-section through an aperture provided with a ball
- Figure 5: illustrates a further embodiment of the invention
- Figure 6: illustrates a belt link with rollers and balls

### Detailed Description of the Invention

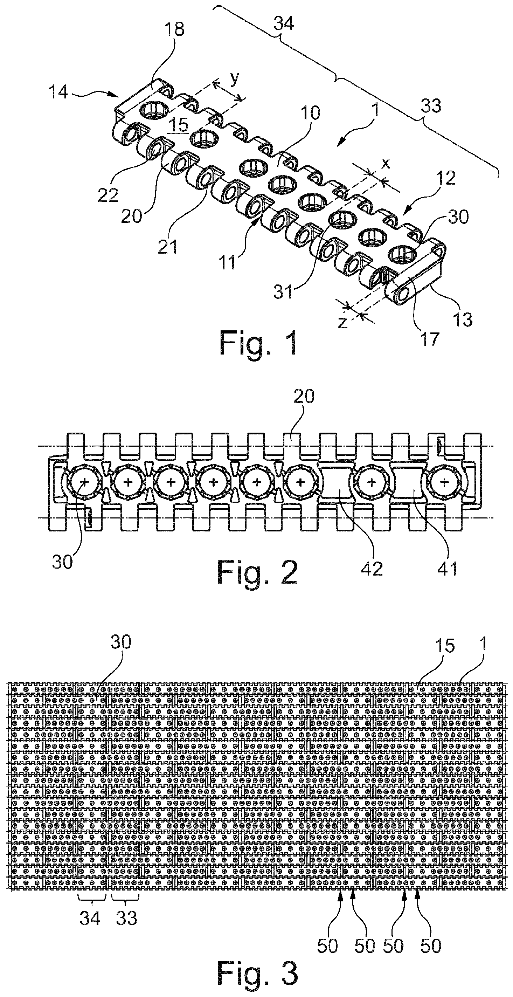

In figure 1 is illustrated a modular belt link 1 according to the present invention. The modular belt link 1 has a body section 10 where the body section 10 has a forward side 11 and a rearward side 12. In this connection it is clear that the definition of forward and rearward is only used to distinguish the two sides and that in practice the conveyor belt assembled from a plurality of modular belt links 1 according to the present invention, for example as illustrated with reference to figure 3, may travel in both directions and is not limited to travel in a forward or rearward direction.

Furthermore, lateral sides 13, 14 are provided where the lateral sides 13, 14 connect the forward and rearward sides 11, 12. The body section has a thickness between a top surface 15 and a rear surface. Furthermore, means are provided along the forward and rearward sides 11, 12 for connecting the modular belt link 1 to other substantially identical modular belt links 1 as illustrated with reference to figure 3.

Turning back to figure 1 the top surface 15 adjacent the lateral sides 13, 14 is provided with a flat section 17, 18. The flat section 17 is delimited by an edge distanced z away from the lateral side 13, 14 such that a surface area is provided. Preferably the surface area 17, 18 is inclined with respect to the top surface 15 such that the flat section has its lowest edge along the lateral sides 14, 13 and thereafter ascends. The incline makes it easier for goods which are forced laterally onto the conveyor belt to be led upwards to the apex level of the balls/rollers accommodated in the apertures. In this manner it becomes easier to slide objects to be transported by the conveyor belt onto the conveyor belt and/or the rollers.

In this particular embodiment the means are in the shape of eye parts 20 where adjacent eye parts 20 on the forward or rearward side 11, 12 are separated by a space 21 corresponding to the lateral width of an eye part 20. In this manner it is possible to interleave adjacent modular belt links 1 such that eye parts on a rear side may be accommodated in the spaces 21 on a forward side. Furthermore, the eye parts are provided with apertures 22 such that when two adjacent modular belt links 1 are interleaved the apertures 22 will overlap laterally through the entire width of the belt link making it possible to insert a connection pin (not illustrated) through the overlapping eye parts thereby connecting adjacent modular belt links 1 in a hinge-like manner as illustrated in figure 3.

A plurality of apertures 30 are provided through the thickness of the modular belt link 1. In this embodiment the apertures 30 are substantially circular such that in use they may accommodate a ball, but the apertures 30 may also have an elongated cross-section such that they can accommodate rollers. The apertures 30 are provided with means 31 such that a ball may be retained inside the aperture 30 but at the same time the friction between the ball and the aperture is so low that it is possible to substantially frictionless rotate the ball in the aperture.

In a first section 33 a first plurality of apertures 30 are separated by the distance X and in a second section 34 the apertures are separated by a second distance Y. In this manner it is clear that part of the surface 15 of the modular belt link has more surface area than another part of the surface of the modular belt link.

By providing the distance Y between apertures in the second section 34 it may with reference to figure 2 be possible to provide cavities 41, 42 in the underside of the modular belt link. In this connection figure 2 illustrates the underside of the modular belt link illustrated in perspective in figure 1. The apertures 30 are through-going apertures and as such leave little on the top and rear side surface area vacant. The cavities 41, 42 are provided such that sprocket wheels may engage and propel the modular belt link and thereby the entire conveyor belt.

As should be evident the apertures 30 suitable to receive balls or in other embodiments where the apertures are elongated rollers constitute a rather large portion of the surface area and as such are able to provide a substantial amount of support points for goods carried on the conveyor. In figure 3 is illustrated a section of an endless conveyor belt assembled from modular belt links 1 as illustrated in figure 1. Due to the distribution of apertures 30 in the upper side 15 of the modular belt links and separating the apertures into sections 34 and 33 where the apertures have different distances X, Y when assembled in a bricklaying pattern the assembled conveyor belt will provide lanes 50 free from apertures and thereby rollers and balls. These lanes 50 conicide with the cavities 41, 42 provided in the underside such that it is clear that sprocket wheels arranged on the drivel axles used to propel the conveyor belts will engage the conveyor belt in these lanes.

As may further be seen from figure 3 the top surface 15 of the conveyor belt is provided with a large number of bearing points in that the balls or rollers inserted in the apertures are closely arranged such that a very supportive, but yet frictionless surface is provided in a conveyor belt structure according to the present invention and as depicted in figure 3.

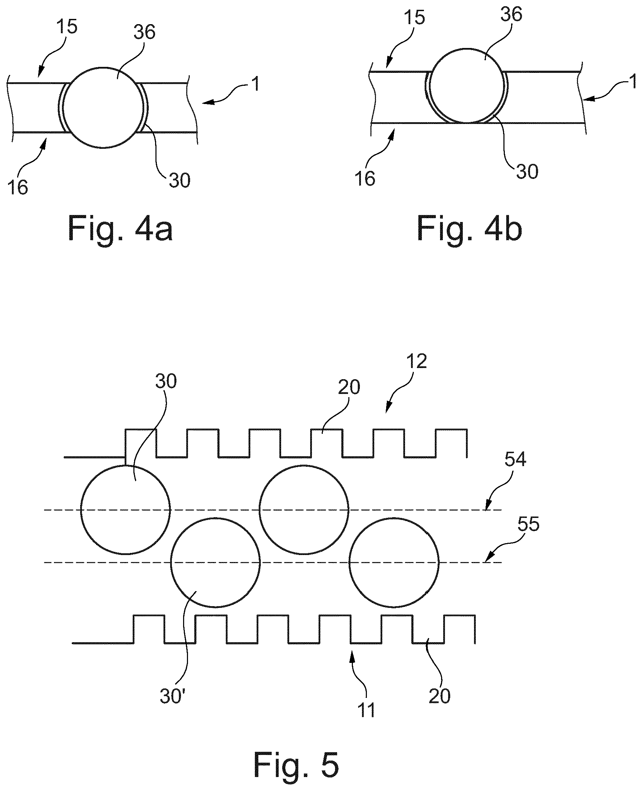

Turning to figure 4A and 4B a schematic cross-section through an aperture 30 provided with a ball 36 is illustrated. In figure 4A it is clear that the ball extends above the top surface 15 of the modular belt link which is also the case with the ball 36 in figure 4B.

In figure 4A, however, the ball also extends below the underside of the modular belt link whereas in figure 4B the underside of the ball 36 is substantially flush with the underside of the modular belt link 1. Such an arrangement may be used for various purposes in that with the configuration as illustrated with reference to figure 4A it is possible to activate the ball 36, for example by having a surface or another conveyor belt engage the underside of the conveyor belt 1 such that the ball comes into frictional engagement with this surface (not illustrated). As the modular belt link moves relative to this engagement surface the ball 36 will be brought to rotate.

Consequently, items carried on the top side of the belt on the apex of the balls 36 will be rotated, for example laterally, with respect to the conveyor belt. In the embodiment illustrated with reference to figure 4B the balls may rotate independently of the modular belt link 1. These types of belts are often used as accumulating belts such that items carried on the conveyor which are brought against a stop will cause the balls 36 to rotate while the conveyor belt still continues forward.

In a further embodiment of the invention another layout is illustrated in figure 5 where the apertures 30 are offset from adjacent apertures 30', but apertures in one row are arranged with a central axis 54 indicated by dashed lines whereas apertures 30' in a second row are arranged along another axis 55. In this manner it becomes possible to accommodate even more balls or rollers per square meter in the surface of a conveyor belt, but also to make the modular belt links longer measure from the forward side to the rearward side.

The centre or centre axis of balls resp. rollers could also be arranged symmetrically offset from a single axis.

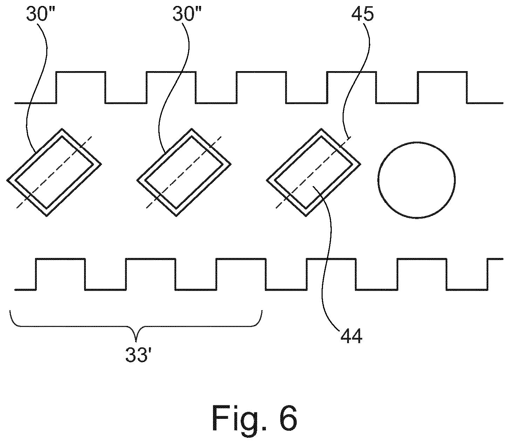

In fig. 6 is illustrated an embodiment where the apertures 30" in the first section 33' are rectangular adapted to receive rollers 44, in this embodiment arranged for rotation around the axis indicated by dashed lines 45. Other orientations or the rollers may also be contemplated. The apertures in the second section may likewise be shaped to accommodate rollers as desired.

## Claims

1. Modular belt link (1) having a body section (10), said body section (10) having a forward side (11) and a rearward side (12), and lateral sides (13,14) connecting said forward and rearward sides (11,12), where said body section (10) has a thickness between a top surface (15) and a rear surface (16), and further that means (20,21) are provided along said forward and rearward sides (11,12) for connecting the modular belt link (1) to other substantially identical modular belt links (1) arranged before and after said modular belt link, and a plurality of apertures (30,30',30") through the thickness are provided, said apertures (30,30',30") being suitable to receive and retain a ball (36) or roller (44) rotatably in each aperture (30,30',30''), such that the balls (36) or rollers (44) extend or may be brought to extend above the top surface (15) of the body section (10) where a first plurality of apertures (33,33') are separated by a mutual first distance x, **characterized in that** a plurality of second apertures (30') are provided spaced from said first plurality of apertures (33) by a distance y and the plurality of second apertures (30') are separated by a mutual second distance y, and where in the rear surface (16) at least partly into the thickness of the body section (10) one or more cavities (41,42) suitable to receive sprockets is/are arranged in between at least some of the apertures (30,30') arranged with the second distance y, and where the first distance x is too short to allow cavities (41,42) suitable to be engaged by sprockets.

2. Modular belt link according to claim 1 wherein the first plurality of apertures (33) comprises apertures arranged in one or more lines (54,55) parallel to the forward side (11).

3. Modular belt link according to claim 1 wherein the first plurality of apertures (33) are off-set arranged around a line parallel to the forward and rearward sides (11,12), such that the apertures (30) alternates between being closer to the front side (11) and the rear side (12).

4. Modular belt link according to claim 1 wherein the lateral distance between the closest apertures (30) in the first plurality of apertures (33) and the second plurality of apertures (34) is the second distance y.

5. Modular belt link according to claim 1 wherein balls (36) are arranged in the apertures (30,30'), and where the diameter of each ball (36) is between 40% and 85% of the shortest distance between the front side (11) and the rear side (12), preferably 50% to 65% and most preferred between 55% and 60%.

6. Modular belt link according to claim 1 wherein the first plurality of apertures (33) and the the plurality of second apertures (30') constitute between 20% and 70% of the top surface (15) area of the modular belt link (1).

7. Modular belt link (1) according to any preceding claim wherein the top surface (15) adjacent each lateral side (13,14) is provided with a flat section (17,18), said flat section (17,18) being delimited by the lateral side (13,14) and an edge parallel to the lateral side, distanced z from the lateral side (13,14) where the flat section (17,18) optionally is inclined with respect to the top surface(15).

8. Modular belt link (1) according to any preceding claim wherein the means (20,21) provided along said forward and rearward sides (11,12) for connecting the modular belt link (1) to other substantially identical modular belt links arranged before and after said modular belt link (1) are eye parts (20), where eye parts (20) projecting from the front side (11) are spaced with a distance along the front side (11) corresponding to the width of an eye-part (20), and where eye parts (20) on the rear side (12) are off-set the width of an eye part (20), such that eye parts on the front side (11) of one modular belt link (1) may be interleafed with eye parts on the rear side (12) of an adjacent modular belt link (1), and where all eye parts (20) are provided with an aperture parallel to the front side, such that when eye parts of adjacent modular belt links are interleafed a continuous aperture is provided across the modular belt links, and where a connection pin is inserted in the overlapped apertures through the eye parts, thereby connecting adjacent modular belt links in a hinge like manner.

9. Modular belt link according to any preceding claim wherein four to eight apertures (30) are provided in the first plurality of apertures (33) and where two to five second apertures (30') are provided.

10. Modular belt link according to any preceding claim wherein balls (36) or a combination of balls (36) and rollers (44) or only rollers (44) are provided in suitable apertures.

11. Conveyor belt assembled from a plurality of modular belt links according to any of claims 1 to 10, where the conveyor belt comprises a number of rows of modular belt links, where each row laterally may comprise a plurality of modular belt links, where when each row comprises two or more belt links, the belt links in one row are constructed by arranging an edge link consisting of only second apertures, said edge link having half the lateral width of the lateral width of a modular belt link, where the following lateral modular belt link is arranged with lateral side adjacent the first apertures towards the edge link, and the following lateral modular belt link is arranged with lateral side adjacent the first apertures towards the previous link and so on across the width of the conveyor belt, and where the adjacent row is provided with the rear side of a modular belt link engaging a side of an edge link with the second apertures in the same lateral orientation as the edge link and the following lateral modular belt link is arranged with the lateral side adjacent the second apertures towards the previous link and so on across the width of the conveyor belt, whereby the conveyor belt will have zones in the travelling direction of the conveyor belt where a zone only comprises second apertures and adjacent zones only comprising first apertures.

## Patentansprüche

1. Modulares Bandglied (1), aufweisend einen Körperabschnitt (10), wobei der Körperabschnitt (10) eine vorwärts gerichtete Seite (11) und eine rückwärts gerichtete Seite (12) und seitliche Seiten (13,14) aufweist, die die vorwärts gerichtete und die rückwärts gerichtete Seite (11,12) verbinden, wobei der Körperabschnitt (10) eine Dicke zwischen einer oberseitigen Oberfläche (15) und einer rückseitigen Oberfläche (16) aufweist und ferner Mittel (20,21) entlang der vorwärts gerichteten und der rückwärts gerichteten Seite (11,12) bereitgestellt sind, um das modulare Bandglied (1) mit anderen, im Wesentlichen identischen modularen Bandgliedern (1) zu verbinden, die vor und nach dem modularen Bandglied angeordnet sind, und eine Vielzahl von Öffnungen (30,30',30'') durch die Dicke bereitgestellt ist, wobei die Öffnungen (30,30',30'') geeignet sind, um eine Kugel (36) oder eine Rolle (44) drehbar in jeder Öffnung (30,30',30") derart aufzunehmen und zu halten, dass die Kugeln (36) oder Rollen (44) sich oberhalb der oberseitigen Oberfläche (15) des Körperabschnitts (10) erstrecken oder dazu gebracht werden können, sich oberhalb dieser zu erstrecken, wobei eine erste Vielzahl von Öffnungen (33,33') durch einen gegenseitigen ersten Abstand x getrennt ist, **dadurch gekennzeichnet, dass** eine Vielzahl von zweiten Öffnungen (30') bereitgestellt ist, die von der ersten Vielzahl von Öffnungen (33) um einen Abstand y beabstandet ist, und die Vielzahl von zweiten Öffnungen (30') durch einen gegenseitigen zweiten Abstand y getrennt ist, und wobei in der rückseitigen Oberfläche (16) zumindest teilweise in der Dicke des Körperabschnitts (10) ein oder mehrere Hohlräume (41,42), geeignet, um Kettenräder aufzunehmen, zwischen mindestens einigen der Öffnungen (30,30'), die mit dem zweiten Abstand y angeordnet sind, angeordnet ist/sind, und wobei der erste Abstand x zu kurz ist, um Hohlräume (41,42) zu erlauben, die geeignet sind, um mit Kettenrädern in Eingriff zu gelangen.

2. Modulares Bandglied nach Anspruch 1, wobei die erste Vielzahl von Öffnungen (33) Öffnungen umfasst, die in einer oder mehreren Linien (54,55) parallel zur vorwärts gerichteten Seite (11) angeordnet sind.

3. Modulares Bandglied nach Anspruch 1, wobei die erste Vielzahl von Öffnungen (33) versetzt rund um eine Linie parallel zu der vorwärts gerichteten und rückwärts gerichteten Seite (11,12) derart angeordnet ist, dass die Öffnungen (30) abwechselnd näher an der vorderen Seite (11) und der rückseitigen Seite (12) sind.

4. Modulares Bandglied nach Anspruch 1, wobei der seitliche Abstand zwischen den nächstgelegenen Öffnungen (30) der ersten Vielzahl von Öffnungen (33) und der zweiten Vielzahl von Öffnungen (34) der zweite Abstand y ist.

5. Modulares Bandglied nach Anspruch 1, wobei Kugeln (36) in den Öffnungen (30,30') angeordnet sind und wobei der Durchmesser jeder Kugel (36) zwischen 40 % und 85 % des kürzesten Abstands zwischen der vorderen Seite (11) und der rückseitigen Seite (12) ist, vorzugsweise 50 % bis 65 % und am meisten bevorzugt zwischen 55 % und 60 %.

6. Modulares Bandglied nach Anspruch 1, wobei die erste Vielzahl von Öffnungen (33) und die Vielzahl von zweiten Öffnungen (30') zwischen 20 % und 70 % der Fläche der oberseitigen Oberfläche (15) des modularen Bandglieds (1) darstellen.

7. Modulares Bandglied (1) nach einem der vorhergehenden Ansprüche, wobei die oberseitige Oberfläche (15) benachbart jeder seitlichen Seite (13,14) mit einem flachen Abschnitt (17,18) bereitgestellt ist, wobei der flache Abschnitt (17,18) durch die seitliche Seite (13, 14) und einen zu der seitlichen Seite parallelen Rand begrenzt ist, der von der seitlichen Seite (13,14) um z beabstandet ist, wobei der flache Abschnitt (17,18) optional in Bezug auf die oberseitige Oberfläche (15) geneigt ist.

8. Modulares Bandglied (1) nach einem der vorhergehenden Ansprüche, wobei die Mittel (20,21), die entlang der vorwärts gerichteten und der rückwärts gerichteten Seite (11, 12) zum Verbinden des modularen Bandglieds (1) mit anderen, im Wesentlichen identischen modularen Bandgliedern, die vor und nach dem modularen Bandglied (1) angeordnet sind, breitgestellt sind, Augenteile (20) sind, wobei Augenteile (20), die von der vorderen Seite (11) hervorstehen, mit einem Abstand entlang der vorderen Seite (11) beabstandet sind, der der Breite eines Augenteils (20) entspricht, und wobei Augenteile (20) auf der rückseitigen Seite (12) in Bezug auf die Breite eines Augenteils (20) derart versetzt sind, dass Augenteile auf der vorderen Seite (11) eines modularen Bandglieds (1) mit Augenteilen auf der rückseitigen Seite (12) eines benachbarten modularen Bandglieds (1) ineinandergeschoben sein können, und wobei alle Augenteile (20) mit einer Öffnung parallel zur vorderen Seite derart versehen sind, dass, wenn Augenteile benachbarter modularer Bandglieder ineinandergeschoben sind, eine durchgehende Öffnung über die modularen Bandglieder hinweg vorgesehen ist, und wobei ein Verbindungsstift in die überlappten Öffnungen durch die Augenteile eingefügt ist, wodurch benachbarte modulare Bandglieder in einer scharnierartigen Weise verbunden werden.

9. Modulares Bandglied nach einem der vorhergehenden Ansprüche, wobei vier bis acht Öffnungen (30) in der ersten Vielzahl von Öffnungen (33) bereitgestellt sind und wobei zwei bis fünf zweite Öffnungen (30') bereitgestellt sind.

10. Modulares Bandglied nach einem der vorhergehenden Ansprüche, wobei Kugeln (36) oder eine Kombination von Kugeln (36) und Rollen (44) oder nur Rollen (44) in geeigneten Öffnungen bereitgestellt sind.

11. Förderband, das aus einer Vielzahl von modularen Bandgliedern nach einem der Ansprüche 1 bis 10 zusammengesetzt ist, wobei das Förderband eine Anzahl von Reihen modularer Bandglieder umfasst, wobei jede Reihe seitlich eine Vielzahl von modularen Bandgliedern umfassen kann, wobei, wenn jede Reihe zwei oder mehr Bandglieder umfasst, die Bandglieder in einer Reihe durch Anordnen eines Randglieds konstruiert sind, das nur aus zweiten Öffnungen besteht, wobei das Randglied die halbe seitliche Breite der seitlichen Breite eines modularen Bandglieds aufweist, wobei das folgende seitliche modulare Bandglied mit der seitlichen Seite benachbart der ersten Öffnungen hinführend zum Randglied angeordnet ist und das folgende seitliche modulare Bandglied derart angeordnet ist, dass die seitliche Seite benachbart den ersten Öffnungen hinführend zu dem vorherigen Glied über die Breite des Förderbands angeordnet ist und so weiter, und wobei die benachbarte Reihe derart vorgesehen ist, dass die rückseitige Seite eines modularen Bandglieds mit einer Seite eines Randglieds im Eingriff ist, wobei die zweiten Öffnungen die gleiche seitliche Ausrichtung wie das Randglied aufweisen, und das folgende seitliche modulare Bandglied derart angeordnet ist, dass die seitliche Seite benachbart den zweiten Öffnungen hinführend zu dem vorherigen Glieds über die Breite des Förderbands angeordnet ist und so weiter, wodurch das Förderband in der Fahrtrichtung des Förderbands Zonen aufweist, wobei eine Zone nur zweite Öffnungen umfasst und benachbarte Zonen nur erste Öffnungen umfassen.

## Revendications

1. Maillon de courroie modulaire (1) comprenant une section corps (10), ladite section corps (10) ayant un côté avant (11) et un côté arrière (12), ainsi que des côtés latéraux (13, 14) reliant lesdits côtés avant et arrière (11, 12), dans lequel ladite section corps (10) a une épaisseur entre une surface supérieure (15) et une surface arrière (16), et en outre des moyens (20, 21) sont prévus le long desdits côtés avant et arrière (11, 12) pour relier le maillon de courroie modulaire (1) à d'autres maillons de courroie modulaires (1) sensiblement identiques, agencés avant et après ledit maillon de courroie modulaire, et
une pluralité d'ouvertures (30, 30', 30") sont ménagées à travers l'épaisseur, lesdites ouvertures (30, 30', 30") étant appropriées pour recevoir et retenir une bille (36) ou un rouleau (44) rotatif dans chaque ouverture (30, 30', 30"), de sorte que les billes (36) ou les rouleaux (44) se prolongent ou peuvent être amenés à se prolonger au-dessus de la surface supérieure (15) de la section corps (10), dans lequel une première pluralité d'ouvertures (33, 33') sont séparées par une première distance mutuelle x, **caractérisé en ce qu'**une pluralité de secondes ouvertures (30') sont prévues espacées de ladite première pluralité d'ouvertures (33) par une distance y et la pluralité de secondes ouvertures (30') sont séparées par une seconde distance mutuelle y, et dans lequel, dans la surface arrière (16), au moins en partie dans l'épaisseur de la section corps (10), une ou plusieurs cavités (41, 42) appropriées pour recevoir des pignons est/sont agencée(s) entre au moins certaines des ouvertures (30, 30') agencées avec la seconde distance y, et dans lequel la première distance x est trop courte pour permettre aux cavités (41, 42) d'être en prise avec les pignons.

2. Maillon de courroie modulaire selon la revendication 1 dans lequel la première pluralité d'ouvertures (33) comprend des ouvertures agencées selon une ou plusieurs lignes (54, 55) parallèles au côté avant (11).

3. Maillon de courroie modulaire selon la revendication 1 dans lequel la première pluralité d'ouvertures (33) sont agencées de manière décalée autour d'une ligne parallèle aux côtés avant et arrière (11, 12), de telle sorte que les ouvertures (30) alternent entre être plus proches du côté avant (11) et du côté arrière (12).

4. Maillon de courroie modulaire selon la revendication 1 dans lequel la distance latérale entre les ouvertures les plus proches (30) parmi la première pluralité d'ouvertures (33) et la seconde pluralité d'ouvertures (34) est la seconde distance y.

5. Maillon de courroie modulaire selon la revendication 1 dans lequel des billes (36) sont agencées dans les ouvertures (30, 30'), et dans lequel le diamètre de chaque bille (36) est compris entre 40 % et 85 % de la distance la plus courte entre le côté avant (11) et le côté arrière (12), de préférence entre 50 % et 65 % et de manière préférée entre toutes entre 55 % et 60 %.

6. Maillon de courroie modulaire selon la revendication 1 dans lequel la première pluralité d'ouvertures (33) et la pluralité de secondes ouvertures (30') constituent entre 20 % et 70 % de la surface supérieure (15) du maillon de courroie modulaire (1).

7. Maillon de courroie modulaire (1) selon une quelconque revendication précédente dans lequel la surface supérieure (15) adjacente à chaque côté latéral (13, 14) comprend une section plate (17, 18), ladite section plate (17, 18) étant délimitée par le côté latéral (13, 14) et un bord parallèle au côté latéral, distant de z du côté latéral (13, 14) dans lequel la section plate (17, 18) est éventuellement inclinée par rapport à la surface supérieure (15).

8. Maillon de courroie modulaire (1) selon une quelconque revendication précédente dans lequel les moyens (20, 21) prévus le long desdits côtés avant et arrière (11, 12) pour relier le maillon de courroie modulaire (1) à d'autres maillons de courroie modulaires sensiblement identiques agencés avant et après ledit maillon de courroie modulaire (1) sont des parties yeux (20), dans lequel les parties yeux (20) faisant saillie à partir du côté avant (11) sont espacés d'une certaine distance le long du côté avant (11) correspondant à la largeur d'une partie œil (20), et dans lequel les parties yeux (20) sur le côté arrière (12) sont décalés de la largeur d'une partie œil (20), de sorte que les parties yeux sur le côté avant (11) d'un maillon de courroie modulaire (1) peuvent être intercalées avec les parties yeux sur le côté arrière (12) d'un maillon de courroie modulaire adjacent (1), et dans lequel l'ensemble des parties yeux (20) présentent une ouverture parallèle au côté avant, de sorte que, lorsque les parties yeux des maillons de courroie modulaires adjacents sont intercalés, une ouverture continue est ménagée d'un côté à l'autre des maillons de courroie modulaires, et dans lequel une broche de liaison est insérée dans les ouvertures en chevauchement à travers les parties yeux, reliant ainsi les maillons de courroie modulaires adjacents à la manière d'une charnière.

9. Maillon de courroie modulaire selon une quelconque revendication précédente dans lequel quatre à huit ouvertures (30) sont ménagées dans la première pluralité d'ouvertures (33) et dans lequel deux à cinq secondes ouvertures (30') sont ménagées.

10. Maillon de courroie modulaire selon une quelconque revendication précédente dans lequel des billes (36) ou une combinaison de billes (36) et de rouleaux (44) ou uniquement des rouleaux (44) sont prévus dans des ouvertures appropriées.

11. Courroie transporteuse assemblée à partir d'une pluralité de maillons de courroie modulaires selon l'une quelconque des revendications 1 à 10, dans laquelle la courroie transporteuse comprend un certain nombre de rangées de maillons de courroie modulaires, dans laquelle chaque rangée peut comporter latéralement une pluralité de maillons de courroie modulaires, dans laquelle, lorsque chaque rangée comprend deux maillons de courroie ou plus, les maillons de courroie dans une rangée sont construits en agençant un maillon de bord constitué uniquement des secondes ouvertures, ledit maillon de bord ayant la moitié de la largeur latérale d'un maillon de courroie modulaire, dans laquelle le maillon de courroie modulaire latéral suivant est agencé avec son côté latéral adjacent aux premières ouvertures en direction du maillon de bord, et le maillon de courroie modulaire latéral suivant est agencé avec son côté latéral adjacent aux premières ouvertures en direction du maillon précédent, et ainsi de suite sur toute la largeur de la courroie transporteuse, et dans laquelle la rangée adjacente comprend le côté arrière d'un maillon de courroie modulaire en prise avec un côté d'un maillon de bord, les secondes ouvertures étant ménagées dans la même orientation latérale que le maillon de bord, et le maillon de courroie modulaire latéral suivant est agencé avec son côté latéral adjacent aux secondes ouvertures en direction du maillon précédent, et ainsi de suite sur toute la largeur de la courroie transporteuse, moyennant quoi la courroie transporteuse comportera des zones dans la direction de déplacement de la courroie transporteuse dans laquelle une zone ne comprend que des secondes ouvertures et des zones adjacentes ne comprennent que des premières ouvertures.
